Europäisches Patentamt

European Patent Office

Office européen des brevets

(19)

(11) Veröffentlichungsnummer : **0 456 238 B1**

(12) **EUROPÄISCHE PATENTSCHRIFT**

(45) Veröffentlichungstag der Patentschrift :
**05.07.95 Patentblatt 95/27**

(21) Anmeldenummer : **91107541.4**

(22) Anmeldetag : **08.05.91**

(51) Int. Cl.⁶ : **H02H 3/08,** H01H 71/00

(54) Vorrichtung zur mehrphasigen Stromüberwachung.

(30) Priorität : **09.05.90 DE 4014820**

(43) Veröffentlichungstag der Anmeldung :
**13.11.91 Patentblatt 91/46**

(45) Bekanntmachung des Hinweises auf die
Patenterteilung :
**05.07.95 Patentblatt 95/27**

(84) Benannte Vertragsstaaten :
**BE CH DE DK ES FR GB IT LI NL**

(56) Entgegenhaltungen :
**DE-B- 2 004 664**
**GB-A- 242 968**
**US-A- 3 546 531**

(73) Patentinhaber : **Magnetbahn GmbH**
**Emslanderstrasse 3**
**D-82319 Starnberg (DE)**

(72) Erfinder : **Hoffmann, Bernhard, Dipl.-Ing.**
**Jakob-Tresch-Strasse 9**
**W-8130 Starnberg (DE)**

(74) Vertreter : **Erbacher, Alfons, Dipl.-Ing.**
**AEG Aktiengesellschaft**
**Patent- und Lizenzwesen**
**D-60591 Frankfurt (DE)**

## Beschreibung

Die Erfindung betrifft eine Vorrichtung gemäß dem Oberbegriff des Anspruchs 1. Bekannte elektronische Vorrichtungen, die einen mehrphasigen Strombezug auf den für alle Phasen gleichzeitig bezogenen Mittelwert überwachen und auch bei geringer Überschreitung des Auslösewertes ein sicheres Signal abgeben, bei dessen Vorhandensein die Stromquelle abgeschaltet wird, arbeiten mit der geforderten Genauigkeit signaltechnisch nicht sicher, so daß sie mehrkanalig ausgelegt werden müssen und somit aufwendig und kostspielig ausgeführt sind. Andere einkanalig sichere Lösungen arbeiten nicht hinreichend schnell.

Aus der DE-B 2004664 ist ein Schnellauslöser für mehrphasige Ströme bekannt, der stromabhängig bewegbare Auslöseanker aufweist, die über einen Koppelarm mit einer Auslöseklappe verbunden sind und von stromdurchflossenen Spulen beaufschlagt werden.

Aufgabe der vorliegenden Erfindung ist es, eine Vorrichtung für eine einfache, einkanalig sichere und schnelle drei bzw. mehrphasige Stromüberwachung bei Bezug auf den für alle Phasen bezogenen Mittelwert unabhängig von der Frequenz der Ströme einschließlich f = o bereitzustellen.

Diese Aufgabe wird durch eine Vorrichtung mit den Merkmalen des Anspruchs 1 gelöst. Vorteilhafte Ausgestaltungen der Erfindung sind den Unteransprüchen zu entnehmen.

Die Erfindung wird im folgenden anhand der Figuren für ein dreiphasiges System näher erläutert. Es zeigen:

Fig. 1 den prinzipiellen Aufbau des erfindungsgemäßen Überstromrelais;

Fig. 2a den zeitlichen Verlauf eines sinusförmigen Stromes;

Fig. 2b die Verläufe der drei Einzelkräfte $F_R$' $F_S$ und $F_T$ bei sinusförmigem Strom durch die Spulen R, S, T in Abbildung 1;

Fig. 2c die Summe der Kräfte $F_R$, $F_S$ und $F_T$ aus Fig. 2b,

Fig. 3 den Stromverlauf eines Pulswechselrichters für Magnetbahnantriebe;

Fig. 4 die Aufsicht eines Ausführungsbeispiels für Anwendung bei Linearmotoren,

Fig. 5 den Schnitt B-B des Ausführungsbeispiels aus Fig. 4,

Fig. 6 den Schnitt A-A aus Fig. 5.

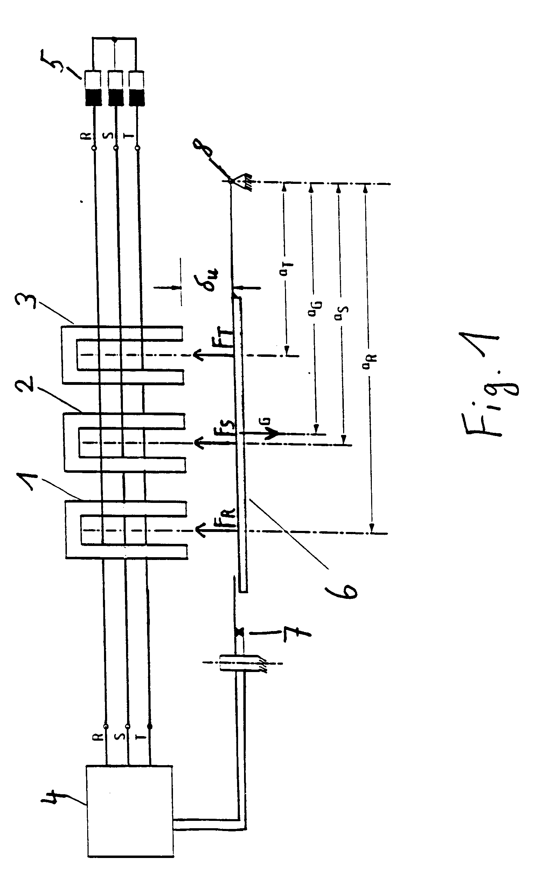

In Fig. 1 ist der prinzipielle Aufbau des erfindungsgemäßen Überstromrelais und seiner Anschlüße an einen Pulswechselrichter 4 und einen Verbraucher 5 dargestellt. Das Überstromrelais wird durch einen dreifachen Elektromagneten realisiert, wobei der Strom mit jeder Phase separat durch je einen der drei U-förmigen Weicheisenkerne 1, 2, 3 geführt wird. Erreichen bzw. Überschreiten die Strombeträge den Auslösewert, ist die dadurch hervorgerufene elektromagnetische Anziehungskraft auf den unter den U-Schenkeln liegenden Anker 6 größer als dessen Gewicht G und der Anker wird angezogen. Bei seiner Aufwärtsbewegung öffnet der Anker einen entsprechend angeordneten Kontakt 7, wodurch der Pulswechselrichter 4 ein sicheres Signal zum Abschalten des Stroms erhält.

Der Anker des Relais ist an einem Ende mit einem Lager 8 drehbar gelagert. Die Bedingung für das Ansprechen des Relais ist dann erfüllt, wenn die Summe der von den drei einzeln erregten Weicheisenkernen ausgeübten Anziehungsmomente auf den Anker größer als das durch das Gewicht hervorgerufene Drehmoment ist:

$$F_R.a_R + F_S.a_S + F_T.a_T = M \geqq G.a_G \quad (Gl.1)$$

$F_{R/S/T}$ : magnetische Anziehungskräfte

G : Gewicht des Ankers

$a_{R/S/T/G}$ : Abstand der Angriffspunkte der Kräfte vom Ankerdrehpunkt

M : resultierendes Drehmoment durch magnetische Anziehungskräfte

Die durch die einzelnen Leiterströme hervorgerufenen Anziehungskräfte können näherungsweise durch folgende Gleichung beschrieben werden:

$$F_u = \frac{\mu o^2.iu^2.A}{2.\delta_u} \quad (Gl.2)$$

A : Polquerschnittsfläche der Weicheisenkerne

$F_u$ : Anziehungskraft durch Weicheisenkern u

$\mu o$ : Permeabilitätskonstante

$i_u$ : Strom im Leiter u

$\delta u$ : Abstand zwischen Anker und Kern u

u : Ersatzindex für Leiterbezeichnung R,S,T

Dabei sind einige vereinfachte Annahmen zugrundegelegt, die u.a. eine ideale homogene Magnetfeldverteilung unter den Kernpolen voraussetzen. Daher kann oben genannte Gleichung nur zur grundsätzlichen Abschätzung zur Dimensionierung, nicht jedoch direkt zur rechnerisch quantitativen Ermittlung der Anziehungskräfte mit hinreichender Genauigkeit herangezogen werden. Wohl aber läßt sich daraus eine näherungsweise Aussage über die relativen Zusammenhänge zwischen Strom $i_u$ und Anziehungskraft $F_u$ sowie Luftspalt $\delta_u$ (Abstand zwischen Anker und Kern) ableiten:

$$F_u = k_u \, i u^2 \qquad , \delta_u = const. \qquad (Gl. \ 3)$$

$k_u$ :  definierte Konstante, gültig für Leiter bzw. U-Eisenkern u, wird durch Messung ermittelt

$$F_u \sim \frac{1}{\delta_u^2} \qquad , i_u = const \quad (Gl. \ 4)$$

Im Normalfall wird der Leiter von einem symmetrischen Drehstromsystem 4 gespeist. Die Summenwirkung der zeitlich um 2/3 versetzten zunächst als sinus-förmig betrachteten Wechselströme verursacht im Antrieb einen gleichförmigen Schub. Dabei wird beim Überstromrelais durch jeden Kern eine pulsierende Anziehungskraft entsprechend dem Quadrat des Stromverlaufes (gl. 3) auf den Anker ausgeübt:

$$F_R = k_R \, i^2 \sin^2 \omega t \quad (Gl. \ 5)$$
$$F_S = k_S \, i^2 \sin^2 (\omega t + 2/3 \, \pi) \quad (Gl. \ 6)$$
$$F_T = k_T \, i^2 \sin^2 (\omega t + 4/3 \, \pi) \quad (Gl. \ 7)$$

t  : laufende Zeit

$\omega$  : Kreisfrequenz der 3 Wechselströme (vom Pulswechselrichter)

i  : Scheitelwert der 3 Wechselströme

$k_{R/S/T}$  : beschreibt Zusammenhang zwischen $F_u$ und $i_{2u}$ entsprechend Gl. 3, speziell für jeden der 3 U-Kerne

Nach Einsetzen in Gl. 1 erhält man damit für das auf den Anker wirkende Anziehungsmoment aller drei Kerne:

$$M = k_R \cdot a_R \cdot i^2 \sin^2 \omega t + k_S \cdot a_S \cdot i^2 \sin^2 (\omega t + 2/3\pi)$$
$$+ k_T \cdot a_T \, i^2 \sin^2 (\omega t + 4/3\pi) \quad (Gl. \ 8)$$

Die unterschiedlichen Abstände der Weicheisenkerne vom Drehpunkt des Ankers werden durch entsprechend kleinere Luftspalteinstellung zum Drehpunkt hin derart ausgeglichen, daß die gleiche Drehmomentwirkung durch jeden Strom entsteht (Symmetrieabgleich):

$$k_R \, a_R = k_S \, a_S = k_T \, a_T = k \quad (Gl. \ 9)$$

k  : beschreibt denselben proportionalen Zusammenhang zwischen M und $i^2$ für jeden Einzelkern

Die Summe der Drehmomentwirkungen M der 3 Phasenströme ist somit ein konstanter, nur noch von der Stromamplitude abhängiger Wert, was durch Einsetzen von (Gl. 9) in (Gl. 8) gezeigt werden kann:

$$M = 1,5 \, k \, i^2 \quad (Gl. \ 10)$$

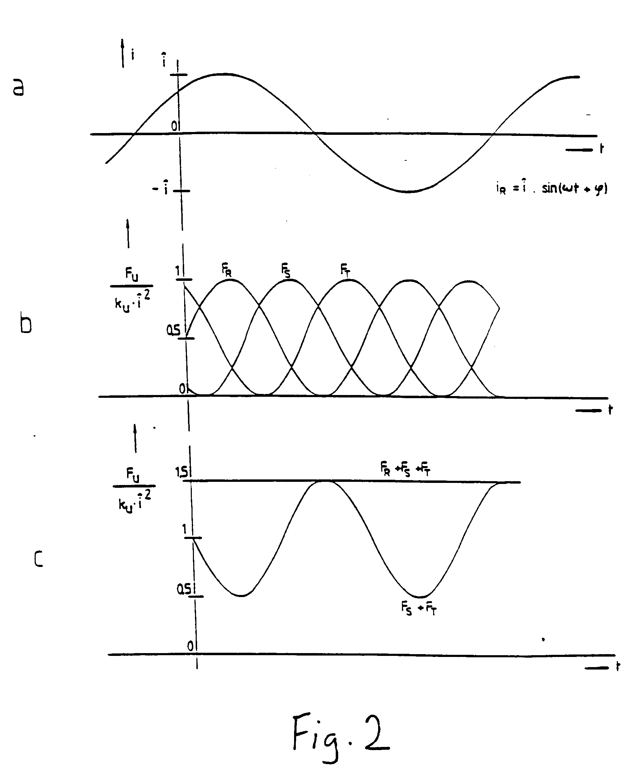

Fig. 2 veranschaulicht die Entstehung dieser von der Momentanphasenlage unabhängigen gleichmäßigen Anziehungswirkung auf den Anker, wenn die Anziehungskräfte der Einzelphasen symmetrisch addiert werden. Der Auslösewert des Relais wird durch das Gewicht des Ankers, das das Rückstellmoment hervorruft, bestimmt (Gl. 1). Es kann somit kontinuierlich die Stromamplitude überwacht werden, da nur von dieser beeinflußt unabhängig vom Momentanwert der Einzelströme ein gleichmäßiges Gesamtanziehungsmoment auf den Anker ausgeübt wird. Ist dieses einer Stromamplitude bzw. einem Strombetrag eindeutig zugeordnete Moment größer als das durch die Schwerkraft hervorgerufene Rückstellmoment, löst das Relais aus:

$$1,5 \, k \, i^2_A = G \, a_G \quad (Gl. \ 11)$$

$i_A$  : Scheitelwert des Stromes, ab dem das Relais ausgelöst wird (entspricht Auslösewert)

Wegen des von der Periodizität der Wechselströme unabhängigen konstanten Anziehungsmoments ist damit eine Stromüberwachung auch bei den beliebig niedrigen Frequenzen ohne Einschränkung möglich.

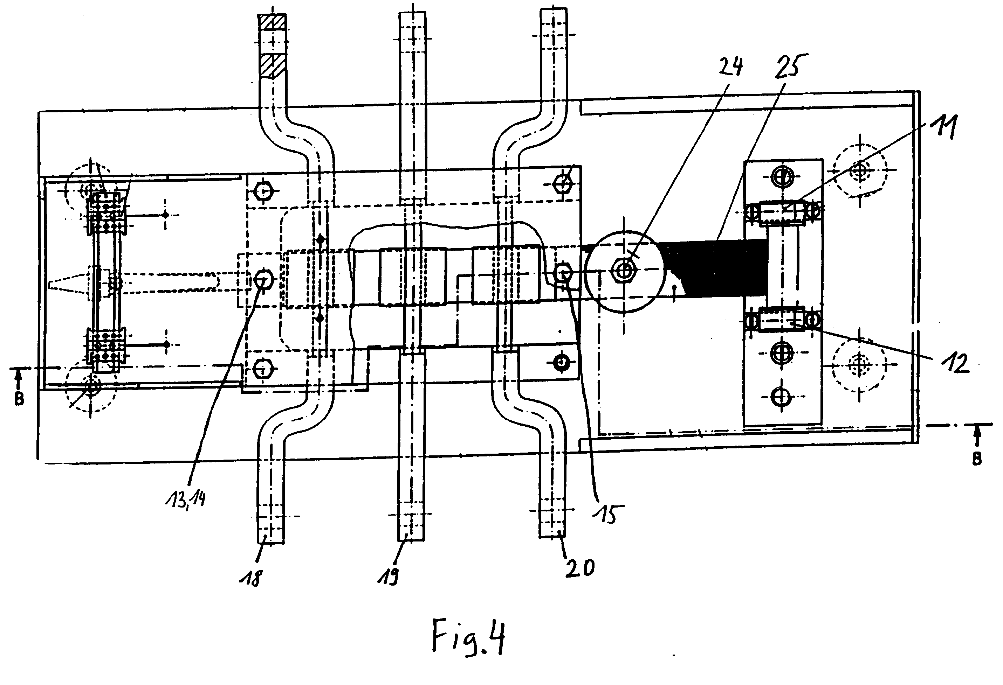

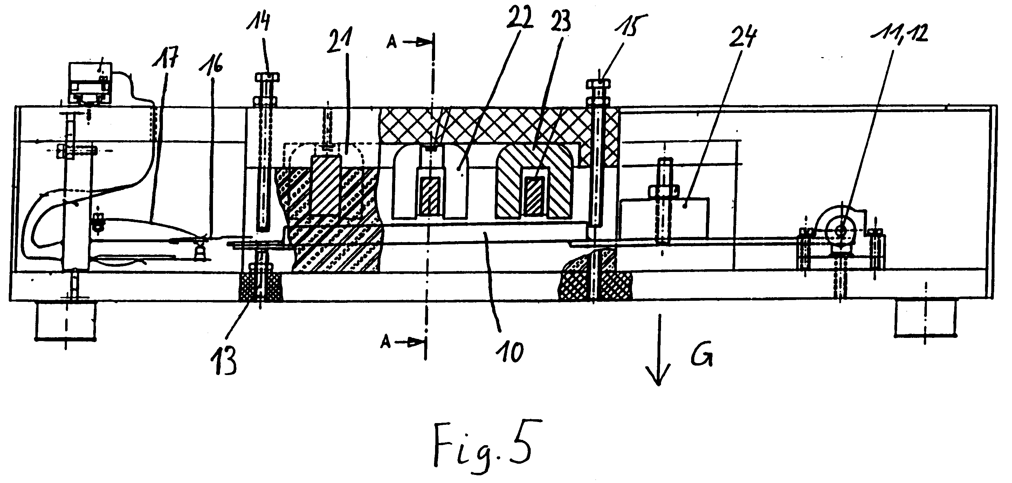

Die Fig. 4, 5 und 6 zeigen einen beispielhaften Aufbau des erfindungsgemäßen Relais bei Verwendung als Überstromrelais für Langstatormotoren in Magnetbahnen. Sie haben dort die Aufgabe, ein Signal zu erzeugen zum Abschalten von Überströmen, die zu einer übermäßig großen Beschleunigung der Magnetbahnfahrzeuge führen würde. Dieses Signal wird zum Abschalten des die Langstatorwicklungen versorgenden Pulswechselrichters verwendet.

Wegen der Schwerkraftausnutzung für das Rückstellmoment des Ankers kann das Relais nur in einer dieser Funktion entsprechenden Einbaulage verwendet werden, wobei der in den Zeichnungen dargestellte Erdanziehungsvaktor G nach unten zeigt. Der Anker 10 ist auf der einen Seite mit zwei Kugellagern 11, 12 um die horizontale Querachse drehbar gelagert. Der Anker 10 ist in der ihm möglichen Drehbewegung nach unten ("untere Ruhelage") durch die Justierschraube 13 und nach oben ("Anzugslage") durch die Justierschrauben 14, 15 begrenzt. Die obere Begrenzung verhindert eine Annäherung des Ankers an die Polflächen der darüberliegenden U-Kerne ab etwa 2 mm Abstand, um eine bei weiterer Annäherung starke mechanische Belastung des Ankers zu verhindern, da die Zunahme der Anziehungskraft hier besonders hoch ist.

Auf der dem Drehpunkt abgewandten Seite steht der Anker so weit über, daß er bei seiner Aufwärtsbewegung in die Anzugslage den beweglichen Teil des entsprechend angeordneten Kontaktes 16 mitnimmt und entgegen der Kraft der Kontaktfeder 17 den Kontakt öffnet. Die mechanische Berührung zwischen Anker und Kontakt findet etwa auf halbem Wege des Hubes statt.

Zur Potentialtrennung ist der Anker im Bereich des Kontaktes elektrisch isoliert.

Die drei Phasenströme vom Pulswechselrichter werden über Kupferschienen 18, 19, 20 durch je einen U-Kern 21, 22, 23 geführt. Im Bereich der U-Kerne sind die Kupferschienen zur Einhaltung der notwendigen Luft- und Kriechstrecken voll isoliert und im äußeren Bereich am Isolierstoffrahmen des Überstromrelais befestigt.

Die Anordnung der Leiter, U-Kerne und Anker ist zunächst durch die elektrischen und magnetischen Daten bestimmt:

- Leiterquerschnitt entsprechend der Effektivstrombelastung
- Leiterabstände und Isolation entsprechend der angegebenen Spannungsbelastung
- hinreichender Abstand der U-Eisenkerne zur Vermeidung unerwünschter direkter magnetischer Beeinflussungen untereinander.

Der Hubweg des Ankers (Luftspalt zwischen Anker und Polflächen der U-Eisenkerne bei unterer Ruhelage) wurde hinsichtlich der Forderung nach einer sicheren Trennung der Relaiskontakte im Anzugsfall einerseits und nach möglichst geringer Beeinflussung des Anzugsvorganges durch die Kontaktfederkraft andererseits auf mindestens 6 mm festgelegt:

- Der Anker legt bei Erreichen des Ansprechwertes zunächst aus seiner unteren Ruhelage ca. 50 % seines Hubweges ohne Berührung des Kontaktsatzes zurück, bevor er den beweglichen Teil des Kontaktes mitnimmt. Bei dem genannten Hubweg läßt sich die Anordnung noch ohne besondere Anforderung an Maßtoleranzen mit einfachen Mitteln entsprechend justieren.

Wegen der quadratisch mit der Luftspaltabnahme ($1/\delta_u$) zunehmenden Anziehungskraft (Gl. 4) wird der Anker, Beibehaltung des dem Auslösewert entsprechenden Stromes vorausgesetzt, bei Auftreffen auf den beweglichen Teil des Kontaktes mit einem Drehmomentüberschuß nach oben bewegt, der bereits etwa dem dreifachen des durch das Ankergewicht verursachten Rückstellmomentes entspricht. (Das Moment, das bei Erreichen des Ansprechstromes gerade ausreicht, den Anker anzuheben, hat bei einem auf die Hälfte reduzierten Luftspalt bereits den vierfachen Wert erreicht).

Mit einem Luftspalt bei unterer Ruhelage in dem genannten Größenbereich kann außerdem der Auslösewert des Stromes gut reproduziert eingestellt werden, da Ungenauigkeiten beim Rückfall des Ankers in der unteren Ruhelage nur noch unwesentlich relativ zum Gesamtluftspalt zwischen U-Kern und Anker beitragen:

- Annahme: Änderung der Ruhelage um 0,1 mm
Auswirkung der relativen Luftspaltänderung bei $\delta u = 6$ mm: 1,7%
Entsprechend (Gl. 3 und Gl. 4) relative Änderung des Auslösewertes:
1,7%

Die Länge des Ankers wird zunächst durch den notwendigen Abstand der U-Kerne untereinander bestimmt. Weiterhin ist der Abstand zum Drehpunkt ausreichend groß gewählt, daß die Luftspalte (bei unterer Ruhelage) zwischen Anker und den einzelnen U-Kernen im selben Größenbereich liegen.

Die übrigen Abmessungen des Ankers sind im wesentlichen aus Gründen einer ausreichenden (überdimensioniert) mechanischen Stabilität zu erklären.

Das Rückstellmoment wird über das Gewicht des Ankers bewirkt. Um dieses unabhängig von den Abmessungen einstellen zu können, besteht die Möglichkeit, zusätzliche Gewichte 24 am Anker anzubringen.

- Das Rückstellmoment ist hinreichend groß, um eine ausreichende Kraft zur Kontaktbetätigung zur Verfügung zu haben. Wie oben erläutert, hängt die zur Verfügung stehende Betätigungskraft für die Kontakte direkt vom vorhandenen Rückstellmoment ab.

Die Rückstellkraft an der Kontaktmitnehmerseite des Ankers liegt mit den realisierten Gewichten und Abmessungen des Ankers einschließlich des Gegengewichtes bei etwa 1,5 N. Die statische Kraft beim Mitnehmen des beweglichen Kontaktteiles beträgt somit ca. 5 N.

Diese Kraft liegt deutlich über dem Wert, der üblicherweise für diese Art von Kontakten in den Signalrelais aufgebracht wird, so daß eine einwandfreie Kontaktbetätigung gewährleistet ist.

Die notwendige Eisenquerschnittsfläche der U-Kerne ergibt sich entsprechend (Gl. 2) aus der bei gegebenem Strom (Auslösewert) und Luftspalt erforderlichen Kraft zum Anziehen des Ankers gegen sein Eigengewicht.

Voraussetzung für die mit Gl. 2, Gl. 3 und Gl. 4 beschriebenen Eigenschaften des Relais ist die Annahme, daß der magnetische Widerstand des Eisens vernachlässigbar gegen den des Luftspaltes ist. Dieses gilt für die verwendeten Materialien nur unter der Bedienung, daß die Sättigungsinduktion nicht überschritten wird. Im betrachteten Magnetkreis treten die höchsten Induktionswerte im Anker wegen des dort gegenüber dem Kern deutlich geringeren Querschnitts auf (Flußkonzentration).

Der Ankerquerschnitt ist daher genügend groß dimensioniert, daß Eisensättigung im Anker erst bei einem Luftspalt unterhalb des Wertes auftritt, bei dem die Kontakte bereits geöffnet sind oder aber ein Strom weit oberhalb des Ansprechwertes fließt; d. h. die durch Eisensättigung hervorgerufenen Abweichungen gegenüber den angegebenen Zusammenhängen zwischen Anziehungskraft und Strom bzw. Luftspalt (geringere Kraftzunahme) haben keinen Einfluß auf das Auslöseverhalten des Relais.

Das Überstromrelais arbeitet grundsätzlich unabhängig von der Frequenz des Stromes. Um zu vermeiden, daß durch Wirbelstromeffekte und damit verbundene Veränderungen der magnetischen Feldverteilung bei hohen Frequenzen die Anziehungskräfte beeinträchtigt werden, sind Kerne und Anker aus geschichteten Eisenblechen 25, 26 hergestellt.

Wie oben erläutert, können die Zusammenhänge zwischen Strom und Anziehungskraft nur näherungsweise aus der angegebenen (Gl. 2) ermittelt werden. Eine genaue theoretische Ermittlung ist mit sehr hohem rechentechnischen Aufwand verbunden. Außerdem ist eine Einstellung entsprechend berechneter und anschließend genau zu überprüfender geometrischer Abmessungen (Luftspalt) und Gewichte nur mit hohem feinmechanischen Aufwand möglich.

Zur Einstellung des Auslösewertes wird daher direkt die Messung des Stromes bei dem das Relais gerade noch ausgelöst wird, durchgeführt. Zu diesem Zweck wird der Strom unterhalb des Auslösewertes eingestellt, kontinuierlich bis zum Auslösen gesteigert und der angemessene Strom bei Auslösezeitpunkt ermittelt.

Eine bestimmungsgemäße Funktion des Relais ist nur gegeben, wenn jeder der 3 Einzelströme die gleiche Anziehungswirkung auf den Anker ausübt. Nur in diesem Fall wird eine von der momentanen Phasenlage des Drehstromsystems unabhängige Auslöseempfindlichkeit erreicht (s. Gl. 8 bis Gl. 10).

Die Einstellung berücksichtigt die unterschiedlichen Abstände der Kraftangriffspunkte ("Hebelarme") der U-Eisenkerne 21, 22, 23 vom Drehpunkt und erfolgt durch Variation der Luftspalte. Ausgegangen wird von einer Vorab-Grobeinstellung (ca. 6 bis 7 mm). Die relative Symmetrieeinstellung der Luftspalte erfolgt dadurch, indem Strom durch nur je einen der 3 Leiter geführt wird und so nacheinander für jeden Leiter derselbe Auslösewert eingestellt wird.

Die Variation der 3 Luftspalte relativ zueinander erfolgt durch Veränderung der unter Ruhelage des Ankers durch Verstellen der Justierschraube 13 für die untere Ruhelage, so wie ggf. durch Veränderung der Lage eines der U-Kerne in vertikaler Richtung. Der sich absolut einstellende Auslösewert ist für die Symmetrieeinstellung unbedeutend.

Die Einstellung des sich absolut einstellenden Auslösestromes wird nach der Symmetrieeinstellung durchgeführt. Diese Einstellung erfolgt über die Veränderung des durch das Ankergewicht hervorgerufenen Rückstellmomentes $G \times a_G$, indem Zusatzgewichte am Anker angebracht bzw. entfernt werden. Eine Störung der Symmetrie wird damit nicht hervorgerufen (Gl. 1) vielmehr wirkt diese Maßnahme gleichmäßig für alle drei Leiter.

Der Auslösewert wird direkt im 3-phasigen Betrieb oder bei Anschluß eines Leiters einzeln mit einem entsprechend überhöhtem Auslösestrom eingestellt.

Entsprechend seiner Aufgabe spricht das Überstromrelais zuverlässig nicht an, wenn der durch den Nennstrom des Pulswechselrichters festgelegte Maximalschub des Antriebs nicht überschritten wird. Kurzzeitige betrieblich auftretende Stromüberschreitungen und insbesondere Stromoberschwingungen und Unsymmetrieen im Drehstromsystem führen entweder nur zu kurzzeitigen Beschleunigungsspitzen ohne für fahrdynamische Betrachungen bedeutsame Dauer, bzw. tragen überhaupt nicht zur Antriebskrafterzeugung bei. Auch auf solche betrieblich auftretende vom Idealfall abweichende Stromverläufe soll das Relais nicht mit Auslösung reagieren, sofern der erwartete Maximalschub nicht überschritten wird.

Andererseits erfolgt sicher eine Auslösung in dem Fall, wenn Ströme fließen, die eine überhöhte Schubkraft hervorrufen können (Überstrom). Dies gilt auch für den Fall irregulärer Stromverläufe (z.B. Ausfall einer Phase).

Bis auf einen definierten Toleranzbereich um den Auslösewert spricht das Relais unterhalb zuverlässig nicht, oberhalb jedoch sicher an.

Von der oben zunächst getroffenen Annahme, daß die vom Pulswechselrichter gelieferten Ströme sinusförmig sind, kann keinesfalls ausgegangen werden. Vielmehr liefert der Pulswechselrichter oberschwingungsbehaftete Ströme, wobei die durch das Zwischentakten zur Spannungseinstellung hervorgerufenen Oberschwingungen den wesentlichen Anteil ausmachen.

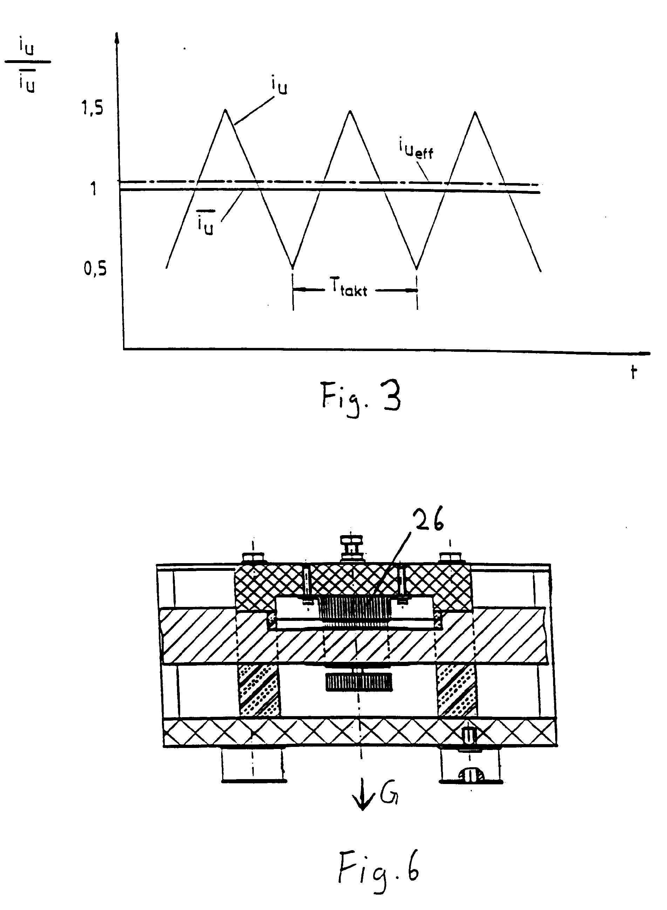

Die Wirkung des Pulswechselrichters-Zwischentaktens verdeutlicht Fig. 3. Der einen Amplitudenwert und der Momentanphasenlage zuzuordnende (Grundschwingungs-) Momentanwert ist als Mittelwert $i_u$ des etwa

EP 0 456 238 B1

dreieckförmigen Stromverlaufes $i_u$ anzusehen. $i_u$ folgt dem (sinusförmigen) Grundschwingungsverlauf,, dem der durch das Takten hervorgerufene höherfrequente (ca. 300 Hz) Stromanteil überlagert ist. (Der in Fig. 3 gezeigte Verlauf stellt eine "Momentaufnahme" des Stromverlaufes dar).

Für das Antriebsverhalten kann von einem Stromverlauf entsprechend dem Mittelwert $i_u$ ausgegangen werden, da nur der Grundschwingungsanteil zm Antrieb beiträgt. Der vom Zwischentakten hervorgerufene überlagerte Stromanteil bewirkt lediglich entsprechend hochfrequente (300 Hz) Wechselkräfte. Auf den Antriebsschub wirkt er sich nicht aus.

Auf die Anziehungskraft auf den Anker des Überstromrelais, welcher ein bestimmter Antriebsschub eindeutig zuzuordnen ist, wirkt dieser überlagerte Zwischentaktstrom auch als zusätzlicher Wechselanteil, der auch hier wegen der Masse des Ankers keine wesentliche Änderung des Ansprechverhaltens (bezogen auf $i_u$) verursacht.

Wegen der im Gegensatz zur Antriebsschubbildung nicht linearen, sondern quadratischen Abhängigkeit zwischen Strom und Anziehungskraft wird durch diese Oberschwingungs-Überlagerung jedoch der Mittelwert der Anziehungskraft erhöht:

mit (Gl. 3), $F_u = k_u \cdot i^2_u$

gilt für den Mittelwert:

$$\overline{F}_u = k_u\, \overline{i^2}_u = k_u\, i^2_u\, \text{eff} \quad (\text{Gl. 12})$$

mit

$$i_{u,eff} = \sqrt{\frac{1}{T_{takt}} \int_0^{T_{takt}} i^2_u\, dt}$$

Stromeffektivwert

$T_{takt}$ : Periodendauer des Pulswechselrichterzwischentaktes

Grundsätzlich gilt in jedem Fall

$$i_{u,eff} \geq \overline{i}_u \quad (\text{Gl. 13})$$

Bei dem in Bild 3 dargestellten Beispiel ist das Verhältnis

$$0,96\, i_{u,eff} = \overline{i}_u \quad (\text{Gl. 14})$$

wodurch sich eine Erhöhung der Anziehungskraft auf den Anker um den Faktor 1,04 ergibt, während, wie oben dargestellt, der Antriebsschub durch die Oberschwingungen unbeeinflußt bleibt.

Die Stromoberschwingungen durch Zwischentakten, die je nach Betriebszustand, befahrendem Langstatorabschnitt und Zuglänge bzw. Beladung unterschiedlich sind, können daher geringfügig zu einer Verschiebung der Ansprechschwelle des Relais zu niedrigeren Grundschwingungsstrom-Betragswerten führen. Bei dem in Fig. 3 dargestellten Verlauf würde so bereits ein Ansprechen bei 96% des eingestellten Auslösewertes stattfinden. Diese im dargestellten Beispiel angenommene Zwischentaktamplitude wird dabei allerdings unter betrieblichen Bedingungen nicht erreicht.

Neben den durch Zwischentakten hervorgerufenen Stromoberschwingungen sind auch andere Abweichungen des Stromverlaufes von der Sinusform betrieblich vorhanden. Sie tragen jedoch nur geringfügig zum Stromeffektivwert bei und können deshalb vernachlässigt werden.

Im Störungsfall können die Anteile der Stromoberschwingungen deutlich ansteigen. Dies führt immer, wie im vorhergehenden Kapitel gezeigt, zu einem Ansprechen des Relais bei geringeren Grundschwingungsstrombeträgen, d. h. bei kleineren Schubwerten. Mit einem verfrühtem Ansprechen infolge einer Störung im Antriebssystem muß daher gerechnet werden.

Auch Unsymmetrie im Drehstromsystem, d. h. nicht Einhalten der Phasenverschiebung von 2/3 $\pi$ oder unterschiedliche Amplituden der drei Ströme führen ebenfalls dazu, daß sich das Verhältnis von Ankeranziehungskraft zum tatsächlich verursachten Antriebsschub am Fahrzeug vergrößert. Es erfolgt ein Ansprechen bereits bei kleinerem Antriebsschub. Dies ist dadurch zu erklären, daß ausgehend von einem bestimmten Stromamplitudenwert die maximale Schubkraft am Fahrzeug bei Symmetrie erreicht wird. Symmetrieabweichungen ohne Schubeinbuße können nur durch Stromamplitudenerhöhungen (gemittelt für die 3 Phasen) kompensiert werden, was jedoch zu entsprechend höheren Anziehungskräften auf den Relaisanker führt.

Überschreitet der Strom geringfügig den Auslösewert, beginnt der Relaisanker mit der Aufwärtsbewegung. Dadurch wird wieder die Anziehungskraft proportional $(1/\delta u)^2$ erhöht, wodurch die Beschleunigung des Ankers stark zunimmt. Aus dieser Abhängigkeit ist sofort zu erkennen, daß die wesentliche Zeit zwischen Überschrei-

6

tung des Auslösewertes bis zur Kontakttrennung bzw. Erreichen der Anzugslage für den Beginn der Bewegung aus der unteren Ruhelage benötigt wird. Die Anfangsbeschleunigung wird dabei dadurch bestimmt, wie weit der Auslösewert überschritten wurde.

Ausgehend davon, daß das Trägheitsmoment des Ankers etwa dem Rückstellmoment durch die Schwerkraft entspricht (d. h. der Anteil des zu Justierzwecken vorhandenen Gegengewichtes am Gesamtgewicht ist gering) gilt für die Anfangsbeschleunigung:

$$b_1 = [(\frac{\hat{i}}{\hat{i}_A})^2 - 1] \cdot g \quad (Gl.\ 15)$$

$g$ : Erdbeschleunigung = $9,81 m/s^2$
$\hat{i}$ : Stromscheitelwert
$\hat{i}_A$ : Auslösewert des Relais (Scheitelwert)
$b_1$ : Beschleunigung des Ankers zu Beginn der Bewegung

Bereits bei einer Überschretung des Auslösewertes um 1% wird der Anker mit $0,02\ g \approx 0,2\ m/s^2$ aus der unteren Ruhelage beschleunigt. Unter Berücksichtigung der oben genannten $(1/\delta u)^2$ - proportionalen Anziehungskraftzunahme ist in diesem Fall nach spätestens 200 ms die (obere) Auszugslage erreicht. Die Reaktionszeit verkürzt sich erheblich, bei stärkerer Überschreitung des Auslösewertes: bei 1,05-fachem Auslösewert (5% Überschreitung) liegt die erwartete Reaktionszeit bereits unterhalb 50 ms.

Die Verwendung des erfindungsgemäßen Relais ist nicht auf Magnetbahnantriebe beschränkt. Es ist vielmehr in allen mehrphasigen Stromüberwachungsfällen einsetzbar. Auch ist es möglich, mit dem Anker 10 eine mechanische oder elektronische Stromunterbrechungseinrichtung direkt anzutreiben.

## Patentansprüche

1. Vorrichtung zur Überwachung von mehrphasigen Strömen mit variablen Frequenzen f einschließlich f = 0 mit Bezug auf den für alle Phasen des Systems gleichzeitig bezogenen Mittelwert, die auch bei geringer Überschreitung des Auslösewertes, insbesondere kleiner 10% und kurzer Zeit insbesondere kleiner 0,1 Sek. ein sicheres Signal abgibt, dadurch gekennzeichnet, daß der zu überwachende Strom mit jeder Phase separat über je eine Schiene (18, 19, 20) durch je einen U-förmigen Weicheisenkern (1, 2, 3, 21, 22, 23) geführt wird und die U-förmigen Weicheisenkerne (1, 2, 3, 21, 22, 23) auf einen gemeinsamen Anker (6, 10) wirken.

2. Vorrichtung nach Anspruch 1, dadurch gekennzeichnet, daß als Rückstellkraft für den Anker ausschließlich die Schwerkraft verwendet wird.

3. Vorrichtung nach Anspruch 1 oder 2, dadurch gekennzeichnet, daß sie bei Magnetbahnen eingesetzt wird.

## Claims

1. Device for monitoring multiphase currents with variable frequencies f, including f = 0, with respect to the mean value referred to all phases of the system at the same time, which device issues a reliable signal even in the case of small exceeding of the trip value, especially less than 10%, and shorter time, especially less than 0.1 seconds, characterised thereby that the current to be monitored is conducted with each phase separate over a respective rail (18, 19, 20) by a respective U-shaped soft-iron core (1, 2, 3, 21, 22, 23) and the U-shaped soft-iron cores (1, 2, 3, 21, 22, 23) act on a common armature (6, 10).

2. Device according to claim 1, characterised thereby that exclusively gravitational force is used as restoring force for the armature.

3. Device according to claim 1 or 2, characterised thereby that it is used with magnetic tracks.

## Revendications

1. Dispositif pour la surveillance de courants polyphasés avec des fréquences f variables, y compris f = 0, avec référence à la valeur moyenne rapportée en même temps pour toutes les phases du système, qui, aussi lors de faible dépassement de la valeur de déclenchement, en particulier plus petit que 10 %, et de temps court, en particulier plus petit que 0,1 s, délivre un signal de sécurité, caractérisé en ce que le courant à surveiller est conduit, avec chaque phase séparément, par l'intermédiaire, chaque fois, d'un rail (18, 19, 20), à travers, chaque fois, un noyau de fer doux (1, 2, 3, 21, 22, 23) en forme de U, et en ce que les noyaux de fer doux (1, 2, 3, 21, 22, 23) en forme de U agissent sur une armature (6, 10) commune.

2. Dispositif selon la revendication 1, caractérisé en ce que, comme force de rappel pour l'armature, la force de gravité est employée exclusivement.

3. Dispositif selon la revendication 1 ou la revendication 2, caractérisé en ce qu'il est mis en oeuvre lors de chemins magnétiques.

Fig. 1

EP 0 456 238 B1

Fig. 2

Fig. 3

Fig. 6

Fig.4

Fig.5

EP 0 456 238 B1